# EUROPÄISCHE PATENTANMELDUNG

(11) **EP 2 835 548 A1**
(43) Veröffentlichungstag der Anmeldung: **11.02.2015**
(21) Anmeldenummer: 13002813.7
(22) Anmeldetag: 08.08.2013
(51) Int. Cl.: F16D 25/08

(54) **Kupplungsanordnung, insbesondere für eine Reibungskupplung in einem Kupplungsausrücksystem eines Kraftfahrzeuges**

(71) Anmelder: Schaeffler Technologies GmbH & Co. KG, 91074 Herzogenaurach (DE)
(72) Erfinder: Ortmann, Simon, 77866 Rheinau-Linx (DE)

(57) **Zusammenfassung**

Die Erfindung betrifft eine Kupplungsanordnung, insbesondere für eine Reibungskupplung, in einem Kupplungsausrücksystem eines Kraftfahrzeuges, umfassend einen Nehmerzylinder (3) mit einem Gehäuse (10) und einer Führungshülse (11), welche einen ringförmigen Druckraum (13) umschließen, in welchem ein Kolben (14) axial beweglich gelagert ist, der fest mit einem Ausrücklager verbunden ist, welcher eine Tellerfeder (5) mit einer Kraft in axialer Richtung beaufschlagt, wobei ein Deckellager fest mit einer Kupplungsabdeckung (7) verbunden ist.

Bei einer Kupplungsanordnung, welche einen reduzierten Bauraum benötigt, ist das Deckellager (9) axial beabstandet zu dem Nehmerzylinder (3) in Richtung Kupplung gelagert, wobei die Kupplungsabdeckung (7) zwischen dem Deckellager und dem Ausrücklager (15) angeordnet ist und insbesondere die Tellerfeder zwischen dem Deckellager und dem Ausrücklager verläuft.

## Beschreibung

Die Erfindung betrifft eine Kupplungsanordnung, insbesondere für eine Reibungskupplung in einem Kupplungsausrücksystem eines Kraftfahrzeuges, umfassend einen Nehmerzylinder mit einem Gehäuse und einer Führungshülse, welche einen ringförmigen Druckraum umschließen, in welchem ein Kolben axial beweglich gelagert ist, der fest mit einem Ausrücklager verbunden ist, welches eine Tellerfeder in axialer Richtung mit einer Kraft beaufschlagt, wobei ein Deckellager fest mit einer Kupplungsabdeckung verbunden ist.

In Kraftfahrzeugen werden Kupplungssysteme eingesetzt, um den Kraftschluss zwischen einem Motor und einem Getriebe zu trennen bzw. herzustellen. Dabei wird ein Ausrücksystem, beispielsweise ein als Hydraulikzylinder ausgebildeter Nehmerzylinder, in einer hydraulischen Kupplungsbetätigungseinrichtung in Richtung eines Ausrückelementes, beispielsweise einer Kupplungsscheibe bewegt, wodurch die Kupplung geschlossen wird. Ausrücksysteme übertragen dabei Kräfte, die infolge eines gedrückten Kupplungspedals oder eines Signals einer Steuerelektronik zur Unterbrechung des Momentenflusses zwischen dem im Kraftfahrzeug verbauten Motor und dem Getriebe führen.

Aus der DE 10 2008 021 161 A1 ist eine Reibungskupplung bekannt, welche mit einer Kupplungsausrückvorrichtung ausgerüstet ist, die einen Nehmerzylinder mit einem Gehäuse umfasst, das mittels eines Deckellagers drehbar und axial fest an einem Befestigungsflansch der Reibungskupplung verbunden ist. Eine Führungshülse umschließt einen ringförmigen Druckraum, in dem ein axial verlagerbarer Ringkolben angeordnet ist, der axial fest mit einem Ausrücklager verbunden ist, das einen radial inneren Bereich einer Tellerfeder in axialer Richtung mit Kraft beaufschlagt. Diese Anordnung besitzt eine radial sehr große Ausdehnung, da beide Lager, d.h. Deckellager als auch Ausrücklager, innerhalb eines sich drehenden Blechflansches verlaufen.

Der Erfindung liegt somit die Aufgabe zugrunde, eine Kupplungsanordnung anzugeben, welche nur einen sehr geringen radialen Bauraum benötigt und für Längs- als auch Queranwendungen des Motors verwendet werden kann.

Erfindungsgemäß wird die Aufgabe dadurch gelöst, dass das Deckellager axial beabstandet zu dem Nehmerzylinder in Richtung Kupplung gelagert ist, wobei die Kupplungsabdeckung zwischen dem Deckellager und dem Ausrücklager geführt ist und insbesondere die Tellerfeder zwischen dem Deckellager und dem Ausrücklager verläuft. Durch diese Ausgestaltung entfällt die Verwendung eines zusätzlichen Blechflansches, was den Vorteil hat, dass der radiale Bauraum für die Kupplungsanordnung wesentlich reduziert wird.

Vorteilhafterweise ist die, das Deckellager abdeckende Kupplungsabdeckung nahe einer Getriebewelle, welche von dem Nehmerzylinder umfasst ist, nach innen in Richtung der Kupplung geführt. Bei einer solchen Ausgestaltung kann auch das Deckellager wesentlich kleiner gestaltet werden. Die Kosten für ein neues Deckellager werden reduziert und sind mit den Kosten eines Ausrücklagers vergleichbar.

In einer Ausgestaltung ist das mit den Zungen der Tellerfeder in Berührung stehende Ausrücklager axial zwischen dem Deckellager und dem Nehmerzylinder angeordnet. Dabei wird nur das Deckellager durch die Kupplungsabdeckung abgedeckt, wodurch der Bauraum für die Kupplungsabdeckung reduziert wird. Durch diese Ausgestaltung ist insbesondere genügend Bauraum vorhanden, um eine solche Kupplungsanordnung bei Queranwendungen von Motoren in Kraftfahrzeugen einzusetzen.

In einer Variante ist das Deckellager an einem Endanschlag der Kupplung für die Zungen der Tellerfeder zentriert. Somit werden an sich in der Kupplung vorhandene Bauelemente zur Zentrierung des Deckellagers benutzt und es entfallen zusätzliche Bauteile zur Zentrierung des Deckellagers. Durch den Wegfall von zusätzlichen Bauteilen zur Zentrierung des Deckellagers reduzieren sich die Herstellungskosten der Kupplungsanordnung. Darüber hinaus besteht ein geschlossener Kraftschluss zwischen der Führungshülse und dem Endanschlag der Zungen der Tellerfeder.

Das Deckellager kann in vielfältiger Form realisiert werden. So kann das Deckellager als Schrägkugellager oder als Rillenkugellager oder als Axial-Nadellager oder als Axial-Kugellager ausgebildet sein. Die vorgeschlagene Kupplungsanordnung ist somit bei einer großen Vielfalt von Deckellagern einsetzbar.

In einer Variante ist das Deckellager auf der verstärkten Führungshülse angeordnet, welche insbesondere mit einem Flansch das Gehäuse des Nehmerzylinders umgreift. Die um mehrere Millimeter verstärkte Führungshülse dient somit gleichzeitig als Träger für das Deckellager nahe der Kupplung.

In einer Weiterbildung weist das Gehäuse eine radial angeordnete Dichtung auf, welche das Gehäuse gegen die Führungshülse abdichtet. Durch diese radiale Dichtung wird gewährleistet, dass bei jeder Betätigung der Kupplung das aus Kunststoff bestehende Gehäuse immer in Richtung des Flansches der Führungshülse gedrückt wird. Neben einer sicheren Abdichtung des Druckraumes wird die Verbindung zwischen Führungshülse und Gehäuse bei einer Druckbeaufschlagung stabilisiert.

Vorteilhafterweise weist die Führungshülse eine Nut auf, in welcher ein Sprengring eingreift. Der Sprengring dient dabei zur Herstellung der mechanischen Verbindung zwischen der Kupplung und dem Nehmerzylinder. Diese mechanische Verbindung ist sehr einfach herstellbar und stabil gegenüber einer Kraftbeaufschlagung.

In einer Ausgestaltung ist die Nut auf der dem Flansch abgewandten Seite der Führungshülse ausgebildet, wobei insbesondere der Sprengring an einer Lagerschulter eines Innenringes des Deckellagers angreift. Somit wird eine Stabilisierung des Sprengringes mit an sich in der Kupplungsanordnung vorhandenen Bauteilen realisiert, was die Kosten bei der Herstellung der Kupplungsanordnung reduziert. Die bei einer Kupplungsbetätigung auftretenden Ausrückkräfte werden dabei sowohl von der Führungshülse, insbesondere deren Flansch, als auch dem Sprengring aufgenommen.

In einer Variante übt eine Vorlastfeder eine Kraft auf das Deckellager aus, wobei die Vorlastfeder vorzugsweise zwischen Gehäuse und Ausrücklager angeordnet ist. Mittels der Vorlastfeder wird gewährleistet, dass die Laufbahnen im Deckellager in einem ständigen Kontakt zu den Wälzkörpern des Deckellagers stehen.

Die Erfindung lässt zahlreiche Ausführungsformen zu. Eine davon soll anhand der in der Zeichnung dargestellten Figuren näher erläutert werden.

Es zeigt:
- Figur 1:: eine erste Ausführungsform der erfindungsgemäßen Kupplungsanordnung
- Figur 2:: einen Ausschnitt aus der Kupplungsanordnung gemäß Figur 1
- Figur 3:: eine Draufsicht auf die Kupplungsanordnung nach Figur 1 aus Richtung der Kupplung
- Figur 4:: eine zweite Ausführungsform der erfindungsgemäßen Kupplungsanordnung

Gleiche Merkmale sind mit gleichen Bezugszeichen gekennzeichnet.

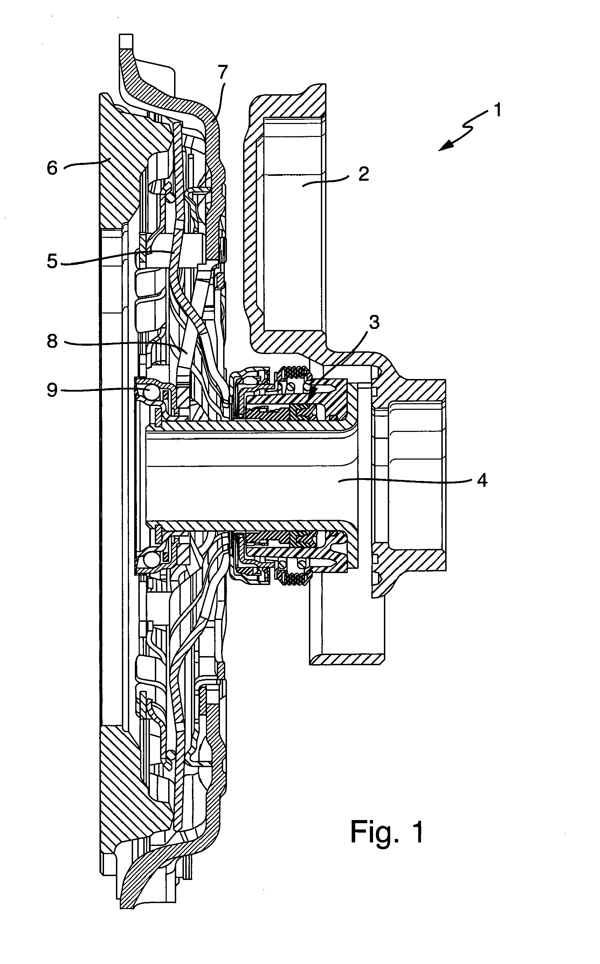

Figur 1 zeigt eine erste Ausführungsform der erfindungsgemäßen Kupplungsanordnung 1. Dabei ist die Kupplungsanordnung 1 mit einer Kupplungsglocke 2 abgedeckt. Die Kupplungsanordnung 1 weist einen Nehmerzylinder 3 auf, welcher sich rotationssymmetrisch um eine Getriebewelle 4 erstreckt. Der Nehmerzylinder 3 drückt auf die Zungen einer Tellerfeder 5, welche an der Kupplung 6 angebunden sind. Die Zungen der Tellerfeder 5 sind durch eine Öffnung 8 der Kupplungsabdeckung 7 hindurchgeführt, welche mit ihrem Ende an einem Deckellager 9, welches nahe der Kupplung 6 ausgebildet ist, anliegt.

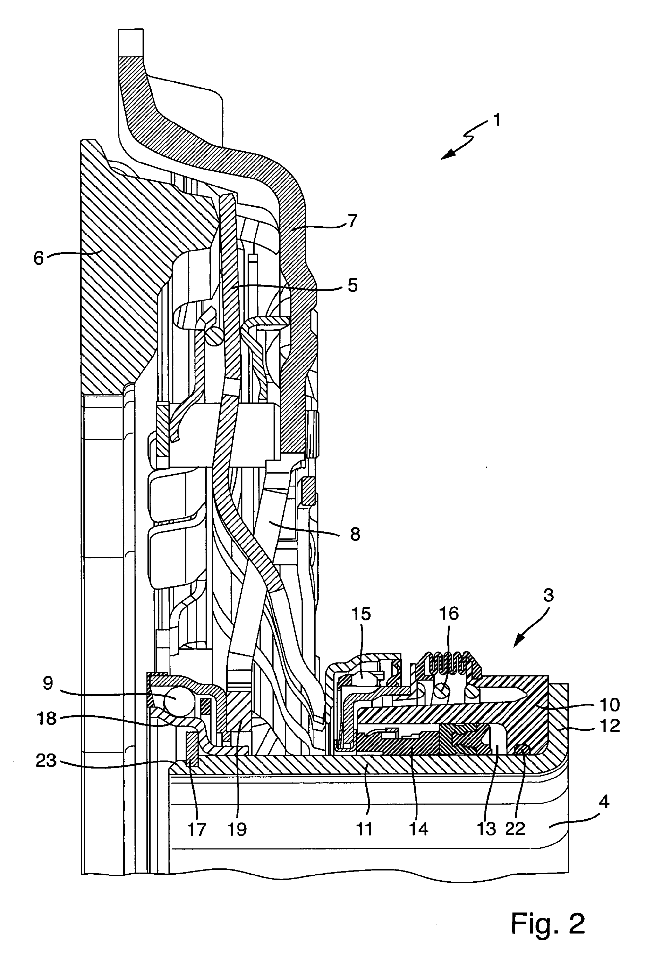

In Figur 2 ist die Kupplungsanordnung 1 in einem Ausschnitt dargestellt. Der Nehmerzylinder 3 verfügt über ein Gehäuse 10, welches auf einer Führungshülse 11 gelagert ist, wobei die Führungshülse 11 einen Flansch 12 aufweist, der das Gehäuse 10 umfasst. Zwischen dem Gehäuse 10 und der Führungshülse 11 erstreckt sich ein Druckraum 13, in welchem ein axial beweglich gelagerter Kolben 14 geführt ist. Der Kolben 14 ist fest mit einem Ausrücklager 15 verbunden, das einen radial inneren Bereich der Tellerfeder 5 in axialer Richtung mit einer Kraft beaufschlagt. Das Ausrücklager 15 wird dabei von einer Vorlastfeder 16 axial gegen die Zungen der Tellerfeder 5 gedrückt, wobei die Vorlastfeder 16 zwischen dem Ausrücklager 15 und dem Gehäuse 10 des Nehmerzylinders 3 gelagert ist.

Das aus Kunststoff bestehende Gehäuse 10 weist darüber hinaus eine radial angebrachte Dichtung 22 auf, welche das Gehäuse 10 gegenüber der Führungshülse 11 radial am Druckraum 13 abdichtet. Hierdurch wird gewährleistet, dass das Gehäuse 10 bei Betätigung der Kupplung immer in Richtung des Flansches 12 der Führungshülse 11 gedrückt wird. Gleichzeitig wird eine zuverlässige Abdichtung des Druckraumes 13 realisiert.

Der Nehmerzylinder 3 verfügt dabei über eine verstärkte Führungshülse 11, welche aus einem Metall gebildet ist und eine Stärke von ca. 3 mm aufweist. Dadurch ist die Führungshülse 11 gegenüber angreifenden Kräften wesentlich stabiler als Führungshülsen nach dem Stand der Technik, deren Stärke sich lediglich auf 1 mm beläuft. Die Führungshülse 11 ist bis in die Nähe der Kupplung 6 verlängert und weist eine Nut 23 auf, in welcher ein Sprengring 17 senkrecht zur Führungshülse 11 eingreift. Dieser Sprengring 17 ist an der Lagerschulter des Innenringes 18 des Deckellagers 9 gelagert. Das Deckellager 9 ist an der Kupplung 6 abgestützt und wird am Endanschlag 19 der Kupplung 6 für die Zungen der Tellerfeder 5 zentriert und aufgesetzt.

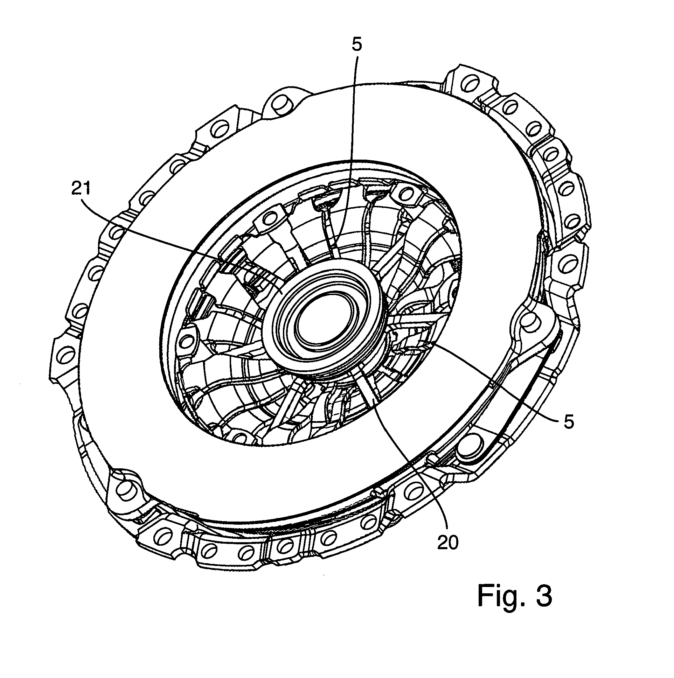

Insbesondere aus Figur 3, in welcher die Draufsicht auf die Kupplung 6 bzw. deren Angriffsfläche durch die Tellerfeder 5 dargestellt ist, sind neben den Zungen der Tellerfeder 5 Stege 20 ausgebildet, welche den Ring 21 der Kupplung 6 mit der Kupplungsabdeckung 7 verbinden.

Das Deckellager 9 kann in verschiedenen Ausführungsformen ausgebildet sein. So sind ein Schräg- oder ein Rillenkugellager genauso denkbar wie ein Axial-Nadellager oder ein Axial-Kugellager. Der Sprengring 17 dient dazu, die Verbindung zwischen der Kupplung 6 und dem Nehmerzylinder 3 herzustellen. Dies erfolgt in sehr einfacher Art und Weise dadurch, dass dieser in die Nut 23 der Führungshülse 11 eingreift.

Im Montageprozess bedeutet dies, dass die Kupplung 6 und der Nehmerzylinder 3 getrennt montiert werden können. Bei dem Verbauen der Kupplung 6 mit dem Nehmerzylinder 3 muss das Deckellager 9 nur aufgesetzt, der Nehmerzylinder 3 in die Kupplung 6 eingeführt und zum Abschluss der Sprengring 17 eingesetzt werden.

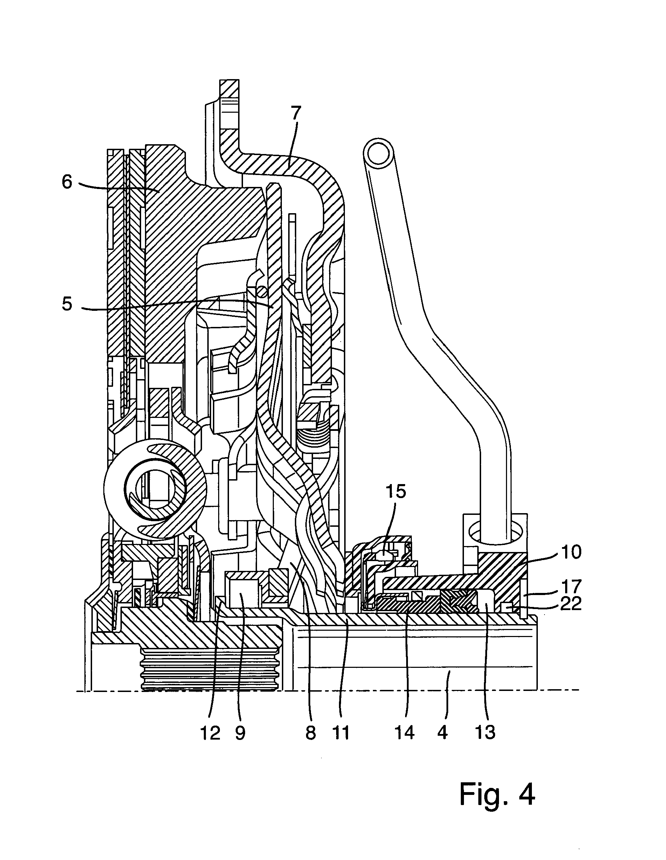

In Figur 4 ist eine zweite Ausführungsform der Kupplungsanordnung 1 dargestellt, welche sich dahingehend von der Figur 2 unterscheidet, dass der Flansch 12 der Führungshülse 11 und der Sprengring 17 miteinander vertauscht sind. Dabei ragt der Flansch 12 nahe der Kupplung 6 annähernd parallel zu dieser in den Innenraum der Kupplungsanordnung 1, während der Sprengring 17 das Gehäuse 10 fixiert. Auch in diesem Fall ist die Dichtung 22 radial zwischen Gehäuse 10 und Führungshülse 11 vor dem Sprengring 17 angeordnet, um ein Trennen von Gehäuse 10 und Führungshülse 11 zu unterbinden. Alle anderen Bauteile sind entsprechend der im Zusammenhang mit Figur 2 erläuterten Anordnung unverändert.

Die vorgeschlagene Kupplungsanordnung 1 weist eine reduzierte radiale Baugröße auf, da das Deckellager 9 und die Kupplungsabdeckung 7 einen kleineren Bauraum benötigen. Dies führt nicht nur zur einer Erhöhung der Vielfalt der Einsatzmöglichkeiten der Kupplungsanordnung in Kraftfahrzeugen mit Motoren, die als Längs- oder Queranwendung genutzt werden, sondern reduziert auch die Herstellungskosten wesentlich.

### Bezugszeichenliste

- 1: Kupplungsanordnung
- 2: Kupplungsglocke
- 3: Nehmerzylinder
- 4: Getriebewelle
- 5: Tellerfeder
- 6: Kupplung
- 7: Kupplungsabdeckung
- 8: Öffnung
- 9: Deckellager
- 10: Gehäuse
- 11: Führungshülse
- 12: Flansch
- 13: Druckraum
- 14: Kolben
- 15: Ausrücklager
- 16: Vorlastfeder
- 17: Sprengring
- 18: Innenring des Deckellagers
- 19: Endanschlag
- 20: Steg
- 21: Ring
- 22: Dichtung
- 23: Nut

## Patentansprüche

1. Kupplungsanordnung, insbesondere für eine Reibungskupplung in einem Kupplungsausrücksystem eines Kraftfahrzeuges, umfassend einen Nehmerzylinder (3) mit einem Gehäuse (10) und einer Führungshülse (11), welche einen ringförmigen Druckraum (13) umschließen, in welchem ein Kolben (14) axial beweglich gelagert ist, der fest mit einem Ausrücklager (15) verbunden ist, welches eine Tellerfeder (5) in axialer Richtung mit einer Kraft beaufschlagt, wobei ein Deckellager (9) fest mit einer Kupplungsabdeckung (7) verbunden ist, **dadurch gekennzeichnet, dass** das Deckellager (9) axial beabstandet zu dem Nehmerzylinder (3) in Richtung Kupplung (6) gelagert ist, wobei die Kupplungsabdeckung (7) zwischen dem Deckellager (9) und dem Ausrücklager (15) geführt ist und insbesondere die Tellerfeder (5) zwischen dem Deckellager (9) und dem Ausrücklager (15) verläuft.

2. Kupplungsanordnung nach Anspruch 1, **dadurch gekennzeichnet, dass** die, das Deckellager (9) abdeckende Kupplungsabdeckung (7) nahe einer Getriebewelle (4), welche von dem Nehmerzylinder (3) umfasst ist, nach innen in Richtung der Kupplung (6) geführt ist.

3. Kupplungsanordnung nach Anspruch 1 oder 2, **dadurch gekennzeichnet, dass** das mit den Zungen der Tellerfeder (5) in Berührung stehende Ausrücklager (15) axial zwischen dem Deckellager (9) und dem Nehmerzylinder (3) angeordnet ist.

4. Kupplungsanordnung nach Anspruch 1, 2 oder 3, **dadurch gekennzeichnet, dass** das Deckellager (9) an einem Endanschlag (19) der Kupplung (6) für die Zungen der Tellerfeder (5) zentriert ist.

5. Kupplungsanordnung nach mindestens einem der vorhergehenden Ansprüche, **dadurch gekennzeichnet, dass** das Deckellager (9) als Schrägkugellager oder als Rillenkugellager oder als Axial-Nadellager oder als Axial-Kugellager ausgebildet ist.

6. Kupplungsanordnung nach mindestens einem der vorhergehenden Ansprüche, **dadurch gekennzeichnet, dass** das Deckellager (9) auf der verstärkten Führungshülse (11) angeordnet ist, welche insbesondere mit einem Flansch (12) das Gehäuse (10) des Nehmerzylinders (3) umgreift.

7. Kupplungsanordnung nach mindestens einem der vorhergehenden Ansprüche, **dadurch gekennzeichnet, dass** das Gehäuse (10) eine radial angeordnete Dichtung (22) aufweist, welche das Gehäuse (10) gegen die Führungshülse (11) abdichtet.

8. Kupplungsanordnung nach einem der Ansprüche 1, 6 oder 7, **dadurch gekennzeichnet, dass** die Führungshülse (11) eine Nut (23) aufweist, in welche ein Sprengring (17) eingreift.

9. Kupplungsanordnung nach Anspruch 8, **dadurch gekennzeichnet, dass** die Nut (23) auf der dem Flansch (12) abgewandten Seite der Führungshülse (11) ausgebildet ist und insbesondere der Sprengring (17) an einer Lagerschulter eines Innenringes (18) des Deckellagers (9) angreift.

10. Kupplungsanordnung nach mindestens einem der vorhergehenden Ansprüche, **dadurch gekennzeichnet, dass** eine Vorlastfeder (16) eine Kraft auf das Deckellager (9) ausübt, wobei die Vorlastfeder (16) vorzugsweise über das Ausrücklager (15) und die Zungen der Tellerfeder (5) auf das Deckellager (9) einwirkt.
